# EUROPÄISCHE PATENTANMELDUNG

(11) **EP 1 010 606 A1**
(43) Veröffentlichungstag der Anmeldung: **21.06.2000**
(21) Anmeldenummer: 98811243.9
(22) Anmeldetag: 18.12.1998
(51) Int. Cl.: B62D 29/00, B62D 33/04, B62D 31/02

(54) **Kastenaufbauten für Strassenfahrzeuge**

(71) Anmelder: Alusuisse Technology & Management AG, 8212 Neuhausen am Rheinfall (CH)
(72) Erfinder: Hein, Jörg, 78256 Steisslingen (DE)

(57) **Zusammenfassung**

Kastenaufbauten für Strassenfahrzeuge bestehend aus Wand- und Dachelementen sowie Dachrahmengurten (2), wobei die Wand- und Dachelemente mittels Anschlusskonfigurationen (3,4) mit dem Dachrahmengurt (2) verbunden sind. Der Kastenaufbau eines bestimmten Fahrzeugstyps kann in verschiedenen Dachhöhenvarianten ausgeführt werden, wobei immer die identischen, vorfabrizierten Wand- und Dachelemente eingesetzt werden können. Die unterschiedlichen Dachhöhen werden durch die Verwendung von Dachrahmengurten (2) mit verschiedenen Querschnittshöhen z erreicht.

## Beschreibung

Die Erfindung betrifft Kastenaufbauten für Strassenfahrzeuge, enthaltend Wandelemente, Dachrahmengurten und ein oder mehrere Dachelemente.

Kastenwagen für den Strassenverkehr werden in der Regel in Serienproduktion gefertigt. Der Kastenaufbau ist dabei ein integrales Bestandteil der Gesamtkonstruktion eines Kastenwagens und bildet zusammen mit der Führerkabine, dem Heckteil und dem Bodenteil eine geschlossene Einheit.

Die Serienproduktion von Fahrzeugen weist bekanntlich den grossen Vorteil auf, dass durch die Massenherstellung der einzelnen Bauteile und der rationellen Montage derselben zu einem kompletten Fahrzeug Einsparungen in den Produktionskosten erzielt werden. So werden beispielsweise die Wand- und Dachelemente und, falls vorhanden, auch die Dachrahmengurten von Kastenaufbauten serienmässig vorfabriziert und bei der Endmontage miteinander zu einem kompletten Kastenaufbau zusammengefügt und mit der Heckpartie, der Führerkabine, sowie dem Bodenteil verbunden.

Wie viele andere Bauteile eines Kastenwagens, welche in Serie hergestellt werden, werden auch die Wand- und Dachelemente aus Kostengründen und produktions-technischen Überlegungen in Einheitsgrössen serienmässig vorfabriziert. Serienfahrzeuge einer Baureihe bzw. eines Typs sind somit mindestens bezüglich ihrer Formgebung und Grösse immer identisch. Deswegen kann bei der Herstellung in Bezug auf Form und Grösse des Kastenwagentyps nicht auf die individuellen Wünsche der Kunden eingegangen werden.

Ein Kastenwagen dient den unterschiedlichsten Verwendungszwecken. Einerseits kann er als Personentransporter ausgestattet und als solcher eingesetzt werden, andererseits wird er auch als Frachttransporter für die unterschiedlichsten Güter verwendet. Die zu transportierende Fracht kann von gross und sperrig bis klein und handlich sein.
Dem vielseitigen Verwendungszweck solcher Kastenwagen steht jedoch der grosse Nachteil entgegen, dass für den einzelnen, in Serie produzierten Fahrzeugtyp die Grösse der Kastenaufbauten immer identisch ist.

Besonders die uniformen Dachhöhen der Kastenaufbauten einer Baureihe werden als nachteilig empfunden und setzen dem Einsatzbereich eines Kastenwagens sogar gewisse Grenzen.
So ist es beispielsweise wünschenswert, dass bei einem Personentransporter die Dachhöhe des Kastenaufhaus derart gewählt wird, dass die Personen beim Zu- und Aussteigen aufrecht gehen können. Ebenso ist es wünschenswert, dass bei sperrigem Frachtgut durch entsprechend bemessene Dachhöhen des Kastenaufbaus, der Stauraum besser genutzt werden kann. Andererseits verlangen Kunden, die wenig und kleines Frachtgut transportieren, Kastenwagen mit kleineren Dachhöhen. Dieser Wunsch kann aus Kostenüberlegungen, beispielsweise in Bezug auf den Treibstoffverbrauch, oder auch aus rein ästhetischer Empfindung erfolgen.

Bis anhin wurde dieses Problem dadurch gelöst, dass die Kastenwagen in einer Einheitsgrösse in Serie produziert wurden und der Kunde nachträglich das Dach des Kastenaufbaus abtrennen liess und beispielsweise einen schalenförmigen Überbau auf den Kastenaufbau montierte, wodurch eine Erhöhung der Dachpartie erreicht wurde. Diese Vorgehensweise ist jedoch sehr umständlich und arbeitsintensiv und somit auch sehr kostspielig. Im weiteren ist es äusserst unrationell, ein neues, einsatzbereites Fahrzeug ab Werk nachträglich abzuändern und den Kundenwünschen anzupassen. Hinzu kommt, dass solche nachträglichen Abänderungen dem ästhetischen Erscheinungsbild des Fahrzeuges bzw. Kastenwagens eher abträglich sind.

Im weiteren besteht die Möglichkeit entweder die Wandelemente und/oder die Dachelemente, welche in diesem Fall vorzugsweise in der Form einer Halbschale vorgefertigt sind, unterschiedlich zu dimensionieren, so dass man auf diese Weise unterschiedliche Dachhöhen der Kastenaufbauten erhält. In der Folge müssen jedoch für die verschiedenen Dachhöhenvarianten Wand- und/oder Dachelemente für jeden Fahrzeugtyp in mehreren Serien hergestellt werden, wodurch sich die Herstellungskosten für Kastenwagen eines Fahrzeugstyps bzw. einer Baureihe erheblich verteuern.

Aufgabe vorliegender Erfindung ist es, einen Kastenaufbau als integraler Bestandteil eines serienmässig produzierten Nutzfahrzeuges zu schaffen, wobei der Kastenaufbau für jeden Fahrzeugtyp in verschiedenen Dachhöhenvarianten hergestellt wird und gleichzeitig die Produktionskosten und der Herstellungsaufwand möglichst tief gehalten werden.

Unter "Dachhöhenvariante" ist zu verstehen, dass bei unveränderter Grundfläche des Kastenaufbaus lediglich die Entfernung oder die Höhe des Daches des Kastenaufbaus, bezogen auf den Boden des Kastenaufbaus, eines Fahrzeugstyps bzw. einer Baureihe geändert wird.

Erfindungsgemäss wird dies dadurch erreicht, dass die Wandelemente auf einer Höhe H enden und auf der Höhe H die Wandelemente mit Dachrahmengurten verbunden sind und die Dachrahmengurten Querschnittshöhen z und Querschnittsbreiten y aufweisen und das Dachelement eine Breite b und das Wandelement eine Höhe h aufweist und das Dachelement auf der Höhe H + z angeordnet ist und Dachhöhenvarianten von Kastenaufbauten der Höhe h + z durch die unterschiedlichen Querschnittshöhen z der Dachrahmengurten bestimmt sind und bei gleicher Höhe h der Wandelemente und gleicher Breite b der Dachelemente die Kastenaufbauten somit unterschiedliche Dachhöhenvarianten aufweisen.

Der Dachrahmengurt wird, in Querschnittsansicht betrachtet, für geringe Dachhöhen als kurzes Verbindungsprofil zwischen Dach- und Wandelement und für grosse Dachhöhen, ebenfalls in Querschnittsansicht, als langes Verbindungsprofil ausgebildet. Die Dachrahmengurten sind vorzugsweise abgewinkelte Profile. Die Dachrahmengurten können für beliebige Dachhöhenvarianten ausgebildet werden.
Die Anschlusskonfigurationen für Dach- und Wandelemente bleiben bei jeder Hochdachvariante insoweit unverändert, dass für die erfindungsgemässen Dachhöhenvarianten identische Wand- und Dachelemente, beispielsweise Wand- und Dachelemente derselben Produktionsserie, verwendet werden können.

Der Dachrahmengurt beinhaltet eine Wand- und Dachanschlusskonfiguration, sowie einen Dachgurt-Zwischenabschnitt. Der Dachrahmengurt kann beispielsweise ein Strangpressprofil sein, vorzugsweise aus Metall, wie Aluminium oder eine Legierung davon. Der Dachrahmengurt kann auch im wesentlichen aus ein-, doppel- oder mehrschichtigen Blechhalbschalen bestehen. Die Strangpressprofile können offene oder Ein- oder Mehrkammerhohlprofile sein. Möglich ist auch, dass der Dachrahmengurt ein aus mehreren einzelnen Strangpressprofilen zusammengesetztes Profil ist, wobei insbesondere die beiden Anschlusskonfigurationen und der Dachgurt-Zwischenabschnitt solche einzelnen Strangpressprofile bilden können.

Die Wand- und Dachanschlusskonfigurationen sind je nach Verbindungstechnik derart ausgebildet, dass die Wand- bzw. die Dachelemente beispielsweise durch Kleben, Nieten, Schrauben, Schweissen, Klemmen oder einer Kombination der vorgenannten Verbindungstechniken mit dem Dachrahmengurt verbunden werden können. Eine bevorzugte Verbindungstechnik ist die Verschraubung der Wand- und/oder Dachelemente mittels Klemmplättchen in hinterschnittene Nuten der Dachrahmengurten gemäss DE-A 27 51 753.

Die Wand- und Dachelemente können als vollständige Module vorgefertigt werden. In einem weiteren Schritt werden die Wandelemente über Anschlusskonfigurationen mit einem Bodenteil verbunden und über die Dachrahmengurten mit dem oder den Dachelementen zusammengefügt. Am hinteren Teil des Kastenaufbaus, in Fahrtrichtung betrachtet, schliesst ein Heckteil an, welches beispielsweise eine Hecktüre aufweist. Der vordere Teil des Kastenaufbaus wird in der Regel durch eine Stirnwand oder durch eine daran anschliessende Führerkabine abgegrenzt.

Die Wand- und Dachelemente können im wesentlichen aus Blechen oder Blechschalen bestehen. Vorzugsweise werden durch Strukturierung oder mittels Spriegel ausgesteifte Bleche, Profilbleche oder Tiefziehschalen aus Blech verwendet. Neben Blechen kommen auch Kunststoffelemente in Form von Platten oder Schalen, als Wand- oder Dachelemente, in Frage. Kunststoffschalen oder -platten sind vor allem als Dachelement geeignet. Als Kunststoffe werden armierte Kunststoffe bevorzugt. Solche armierte Kunststoffe sind beispielsweise mit Füllstoffen oder Verstärkungsfasern, wie Glasfasern, Kohlefasern, Aramidfasern, Polyamidfasern usw. oder mit Geweben, Gewirken oder Vliesen genannter Materialien, verstärkte Kunststoffe. Geeignete Kunststoffe sind insbesondere Polyvinylchlorid, Polyamide, Polycarbonate, Polymere, Copolymere und Polyblends des Styrol-Butadiens, des Acrylinitril-Butadiens und weitere.

Kunststoffschalen oder -platten können auch zwei- oder mehrschichtige Verbundplatten sein, beispielsweise gemäss EP 0 628 470 aus einer oberen und unteren Deckschicht und einer Kernschicht.
Die Dachelemente können beispielsweise unter Vorspannung eingebaut werden.

Die Bleche können aus Eisen- oder Nichteisenmetallen, wie Eisen, verzinktes Eisen, Stahl, Aluminium und seine Legierungen oder Magnesium und seine Legierungen gefertigt sein.

Vorgenannte Beispiele für Wand- und Dachelemente weisen alle entsprechende Anschlusskonfiguration zur Verbindung mit dem Dachrahmengurt auf.

Im weiteren können für die Wand- und Dachelemente auch Rahmen- oder sogenannte Space-Frame-Konstruktionen aus rahmenbildenden Profilen und diese verbindenden Knoten, verwendet werden.

Die Wandelemente bestehen beispielsweise aus Vertikalprofilen, welche durch Querprofile miteinander verbunden sind. Die gegen aussen gerichtete Wandseite wird z.B. mit einer Verkleidung aus Blech oder Kunststoffelementen versehen, welche auf den Vertikal- und/oder Querprofilen befestigt wird. Die Blechverkleidung kann aus Eisen- oder Nichteisenmetallen bestehen. Vorzugsweise besteht sie aus Aluminium oder seinen Legierungen. Als Kunststoffe werden vorzugsweise armierte Kunststoffe bevorzugt. Solche armierte Kunststoffe sind beispielsweise mit Verstärkungsfasern, wie Glasfasern, Kohlefasern, Aramidfasern, Polyamidfasern usw. oder Geweben, Gewirken oder Vliesen genannter Materialien verstärkte Kunststoffe.

Das dachwärtige Ende eines solchen Wandelementes weist eine Anschlusskonfiguration für die Verbindung mit dem Dachrahmengurt auf. Diese Anschlusskonfiguration ist vorzugsweise in der Form eines durchgehenden Längsprofils ausgebildet, welches auf den dachwärtigen Enden der Vertikalprofile aufliegt und mit diesen verbunden ist.
Insbesonders bei Personentransportern können in den Wandelementen zusätzlich noch Fenster aus Glas oder Kunststoff eingebaut sein.

Das Dachelement ist beispielsweise als Rahmenkonstruktion aus Dachspriegeln gefertigt. Darüber wird eine Dachverkleidung aus Blech oder Kunststoff angebracht.

Die Wand- und/oder Dachelemente können im weiteren partiell oder durchgehend transparente oder durchscheinende Kunststoffverkleidungen enthalten, welche beispielsweise den Lichtdurchlass in den Frachtraum ermöglichen, im letzteren Fall, ohne dass von aussen direkt Einblick auf das Transportgut gewährt wird.

Wand- und Dachelemente können an den entsprechenden Stirnseiten Anschlusskonfigurationen für die Verbindung mit dem Heckteil, des Bodenteils und der Führerkabine aufweisen.

Die erfindungsgemässen Kastenaufbauten können selbsttragend oder nicht selbsttragend ausgeführt sein. Selbsttragende Kastenaufbauten können die Anschlusskonfigurationen für die Radaufhängungen aufweisen. Nicht selbsttragende Kastenaufbauten können sich auf einen Rahmen abstützen.

Der erfindungsgemässe Kastenaufbau im Baukastensystem hat den Vorteil, dass trotz unterschiedlichen Dachhöhenvarianten für jeden Fahrzeugtyp die identischen Wand- und Dachelemente verwendet werden können. Dadurch können die Wand- und Dachmodule weiterhin in einer oder wenigen Serien vorfabriziert werden. Die rationelle Serienherstellung von Fahrzeugen mit Kastenaufbauten bleibt trotz unterschiedlichen Dachhöhenvarianten weiterhin gewährleistet.

Durch Beibehaltung der Anzahl herzustellender Sehen von Wand- und Dachelementen müssen für die Fabrikation der Wand- und Dachelement keine weiteren, teuren Vorrichtungen, wie Montagevorrichtungen, angeschafft werden. Insbesondere benötigt man beispielsweise keine zusätzlichen Werkzeuge zur Herstellung von Tiefziehschalen aus Blech verschiedener Grössen. Ebenso benötigt man keine zusätzlichen Press- und/oder Giessformen zur Herstellung von unterschiedlich grossen Kunststoffteilen, z.B. für Dachelemente. Im weiteren erspart man sich mit der erfindungsgemässen Konstruktion bei den Produktionsabläufen und bei der Logistik, sowie der Lagerverwaltung erheblichen Mehraufwand.

Die Dachrahmengurten werden vorzugsweise als Strangpressprofile hergestellt. Die Produktionsabläufe zur Herstellung eines solchen Profils sind weit weniger aufwendig und kompliziert als die Herstellung von komplexen Wand- oder Dachelementen, wie dies beispielsweise bei Rahmen- oder Space-Frame-Konstruktionen mit Aussenverkleidungen aus Metall oder Kunststoff, aber auch bei Tiefziehblechen oder bei Kunststoffteilen aus Pressformen der Fall ist.
Im weiteren können für jeden Fahrzeugtyp, welcher je nach Verwendungszweck als Personen- oder Frachttransporter beispielsweise Wandelemente mit und Wandelemente ohne Fenster oder unterschiedliche Wandverkleidungen vorsieht, immer dieselben Dachrahmengurten der gewünschten Grösse verwendet werden.

Die erfindungsgemässen Kastenaufbauten sind beispielsweise für Kastenwagen mit Gesamtbreiten von 1.50 m - 2.50 m, vorzugsweise 1.60 m - 2.20 m, und Gesamthöhen von 1.80 m - 2.60 m, vorzugsweise 1.90 m - 2.40 m, bestimmt.

Im folgenden wird die Erfindung anhand eines Beispiels und mit Bezug auf die beiliegenden beispielhaften Zeichnungen näher erläutert. Es zeigen:
- Fig. 1:: einen Querschnitt eines Kastenaufbaus;
- Fig. 2:: einen Querschnitt zweier Dachrahmengurten mit erfindungsgemäss unterschiedlichen Querschnittshöhen;
- Fig. 3:: einen Querschnitt eines Dachrahmengurtes mit angeschlossenem Wand- und Dachelement;
- Fig. 4:: einen Querschnitt durch einen Dachspriegel;
- Fig. 5:: einen Querschnitt eines Dachrahmengurtes mit angeschlossenem Wand- und Dachelement.

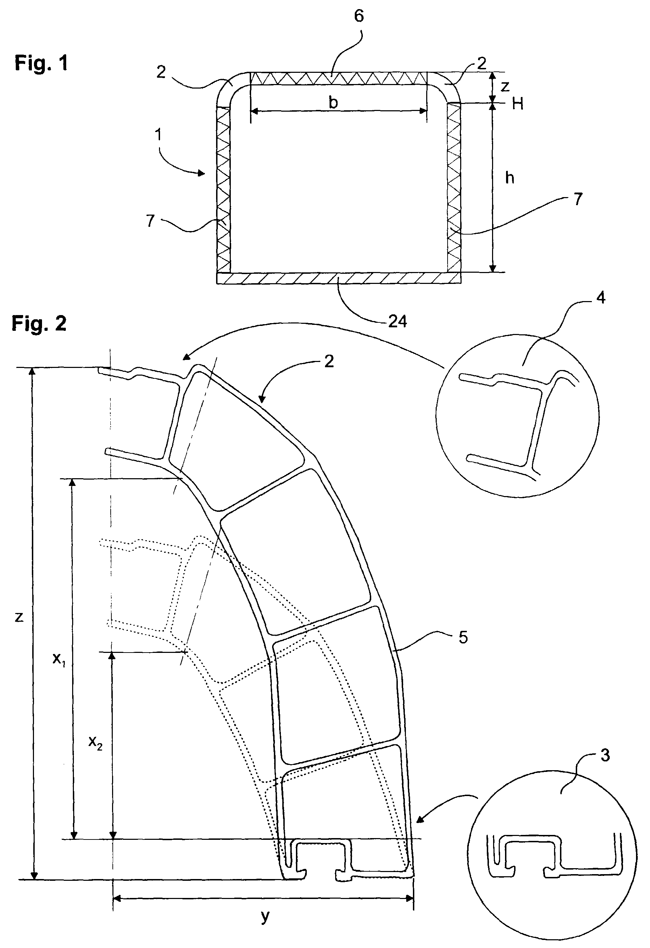

Beim vorgeschlagenen Kastenaufbau 1 (Fig. 1) bilden die Dachrahmengurten 2 der Höhe z die Eckverbindungen zwischen dem Dachelement 6 der Breite b und den Wandelementen 7 der Höhe h. Die Wandelemente 7 enden auf einer Höhe H und sind auf dieser Höhe H mit Dachrahmengurten 2 verbunden. Die Dachelemente 6 sind somit auf einer Höhe H + z angeordnet. Die Wandelemente 7 sind über entsprechende Anschlusskonfigurationen mit einem Bodenteil 24 verbunden.

Die Dachrahmengurten 2 bestehen aus drei funktional bedeutenden Teilen: dem Dachgurt-Zwischenabschnitt 5, der Dachanschlusskonfiguration 4 und der Wandanschlusskonfiguration 3 (Fig. 2.). Der Dachrahmengurt 2 kann je nach gewünschter Dachhöhe, in Querschnittsansicht betrachtet, kurz und abgewinkelt oder lang und abgewinkelt ausgebildet sein, wodurch man Dachrahmengurten 2 mit variablen Querschnittshöhen z erhält. Im vorliegenden Ausführungsbeispiel werden die unterschiedlichen Querschnittshöhen z des Dachrahmengurtes 2 durch die Variation der Querschnittshöhen x des Dachgurt-Zwischenabschnittes 5 erreicht.

Fig. 2 zeigt zwei Dachrahmengurten 2 im Querschnitt mit erfindungsgemäss unterschiedlich ausgebildeten Dachgurt-Zwischenabschnitten 5 mit den beliebigen Querschnittshöhen x₁ und x₂.

Am oberen dachwärtigen Ende des Dachgurt-Zwischenabschnittes 5 schliesst die Dachanschlusskonfiguration 4 an und am unteren, bodenwärtigen Ende des Dachgurt-Zwischenabschnittes 5 schliesst die Wandanschlusskonfiguration 3 an. Dachanschlusskonfiguration 4, Dachgurt-Zwischenabschnitt 5 und Wandanschlusskonfiguration 3 werden vorzugsweise aus einem stranggepressten Ein- oder Mehrkammerhohlprofil, vorzugsweise aus Aluminium oder seinen Legierungen gefertigt.

Der Dachgurt-Zwischenabschnitt 5 ist derart abgewinkelt, dass die Querschnittsbreite y des Dachrahmengurtes 2 trotz jeweils unterschiedlichen Querschnittshöhen x_{1,} x₂ ..., xᵢ der Dachgurt-Zwischenabschnitte 5 unverändert bleibt, und dass die vertikale Ausrichtung sowohl der Dachanschluss- 4 als auch der Wandanschlusskonfiguration 3 bei allen Dachhöhenvarianten unverändert bleibt. Damit wird gewährleistet, dass, trotz beliebigen Querschnittshöhen x der Dachgurt-Zwischenabschnitte 5, Wand- 7 und Dachelemente 6 von derselben Ausführungsform und -grösse verwendet werden können.

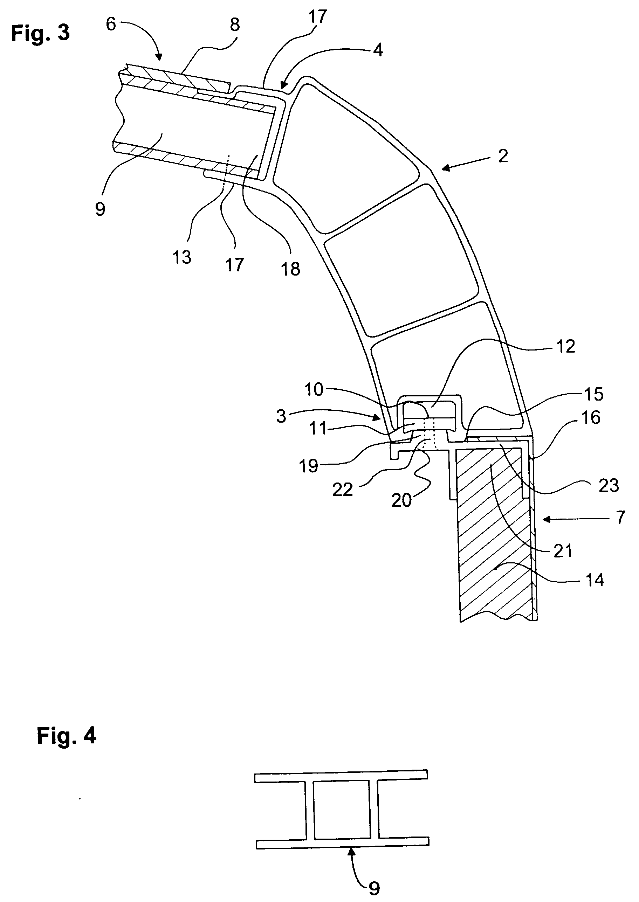

Mittels Wandanschlusskonfiguration 3 wird das Wandelement 7 und mittels Dachanschlusskonfiguration 4 wird das Dachelement 6 mit dem Dachrahmengurt 2 verbunden (Fig. 3).

Die Dachanschlusskonfiguration 4 der abgebildeten Ausführungsform enthält eine U-förmige Rinne 18, welche durch eine äussere und innere Fahne 17 begrenzt wird.

Das Dachelement 6 enthält doppel-T-förmigen Dachspriegel 9 (Fig. 4), auf welchen eine Dachverkleidung 8 durch Nieten, Kleben oder durch andere Befestigungstechniken angebracht ist. Die Dachverkleidung ist vorzugsweise aus einem Aluminiumblech.

Die stirnseitigen Enden der Dachspriegel 9 werden bei der Montage des Dachelementes 6 an den Dachrahmengurt 2 in die U-förmige Rinne 18 eingeführt und durch Kleben und/oder durch Nieten 13 mit den beiden Fahnen 17 verbunden. Die Dachverkleidung 8 überlappt die äussere Fahne 17 aussenseitig um jenen Bereich, welcher aufgrund einer Abstufung als eine die Dachverkleidung 8 aufnehmende Vertiefung ausgebildet ist, so dass der aussenseitige Übergang von der Dachverkleidung 8 zum Dachrahmengurt 2 ohne Höhenversetzung erfolgt. Die Dachverkleidung 8 wird mit der äusseren Flanke 17 aussenseitig verklebt und/oder auf der gesamten Profillängsseite mit Nieten 13 befestigt, wobei die Nieten auch durch die Dachspriegel 9 geführt werden können.

Die Wandanschlusskonfiguration 3 in der in Fig. 3 abgebildeten Ausführungsform enthält eine hinterschnittene Nut 12.

Das Wandelement 7 besteht aus einer Rahmenkonstruktion aus Vertikalprofilen 14 und diese verbindenden Querprofilen (in den Zeichnungen nicht gezeigt). Die Querprofile sind zwischen den Vertikalprofilen 14 angeordnet und liegen mit ihren stirnseitigen Endflächen an den längsseitigen Flächen der Vertikalprofile 14 an. Auf den gegen den Dachrahmengurt 2 gerichteten, dachwärtigen Seitenendflächen der Vertikalprofile 14 liegt ein Wandlängsprofil 23 auf, das eine bodenwärts geöffnete U-förmige Rinne 21 und eine daran anschliessende Fahne 20 mit einer dachwärtig anliegenden, rippenartigen Erhebung 19 enthält. Die U-förmige Rinne 21 des Wandlängsprofils 23 nimmt die dachwärtigen Endbereiche der Vertikalprofile 14 formschlüssig auf. Die Vertikalprofile 14 und das Wandlängsprofil 23 sind mittels Kleb-, Niet- oder Schraub-Verbindungen oder einer Kombination von diesen zusammengefügt. An der Aussenseite der Rahmenkonstruktion wird eine Wandverkleidung 16, vorzugsweise eine Blechverkleidung aus Aluminium oder dessen Legierungen, an die Vertikalprofile 14 und Querprofile angebracht. Am dachwärtigen Ende des Wandelementes 7 ist die Wandverkleidung 16 über die längsseitige Aussenkante des Wandlängsprofils 23 gebogen und mit diesem durch Kleben und/oder Nieten verbunden.

Die Wandanschlusskonfiguration 3 weist auf der dem Wandelement zugewandten Seite eine Abstufung 15 auf, so dass nach dem Zusammenfügen von Wandelement 7 und Dachrahmengurt 2 zwischen dem Dachrahmengurt 2 und dem Wandlängsprofil 23 eine schmale Ausnehmung entsteht, in welcher der umgebogene Endabschnitt der Wandverkleidung 16 verläuft.

Im wesentlichen parallel zu den beiden Flanken der U-förmigen Rinnen 21 verlaufende Bohrungen 22 durchqueren die rippenartige Erhebung 19 und die Fahne 20.

Die rippenartige Erhebung 19 wird bei der Montage des Wandelementes 7 an den Dachrahmengurt 2 formschlüssig in den Eintrittsbereich der hinterschnittenen Nut 12 geschoben. Eine das Bohrloch 22 durchsetzende Schraube 10 greift in die hinterschnittene Nut 12 der Wandanschlusskonfiguration 3, wo sie in das Schraubloch eines Klemmstücks 11 gedreht wird. Durch das Festdrehen der Schraube wird das Klemmstück 11 in der Nut 12 festgeklemmt. Das Wandelement 7 wird an mehreren Stellen längsseitig mit dem Dachrahmengurt 2 nach beschriebener Methode verbunden.

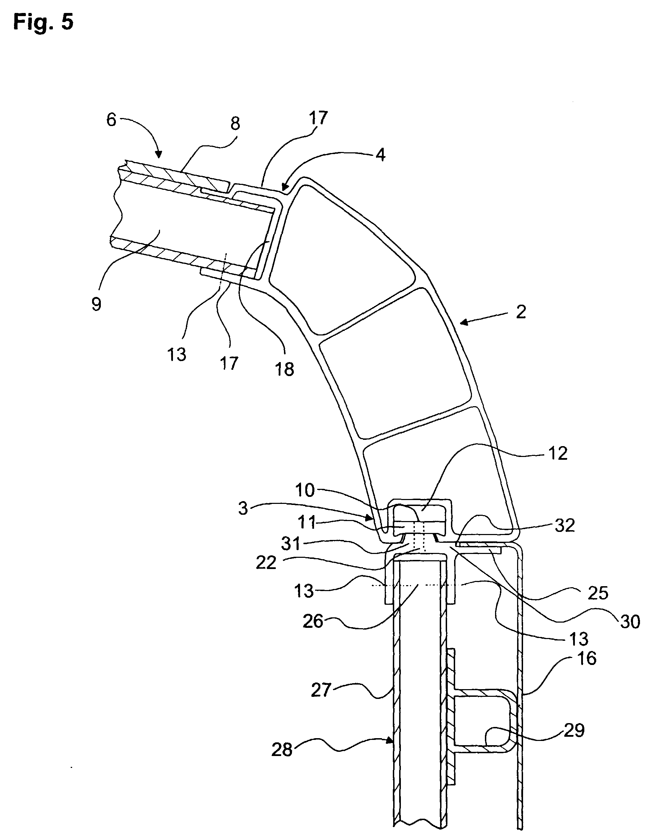

Fig. 5 zeigt ein weiteres Ausführungsbeispiel eines Dachrahmengurtes mit angeschlossenem Wand- und Dachelement (28, 6). Der Dachrahmengurt 2 und auch die Wand- und Dachanschlusskonfigurationen (3, 4) sind dieselben wie im Ausführungsbeispiel gemäss Fig. 3. Das Wandelement 28 besteht aus einer Rahmenkonstruktion aus Vertikalprofilen 27 und diese verbindenden Querprofilen 29.
Die Vertikalprofile 27 sind doppel-T-förmige Profile und die Querprofile 29 sind einfache Hohlprofile mit seitlichen Flanken. Die Querprofile 29 sind aussenseitig über die beiden seitlichen Flanken mit den Vertikalprofilen 27 mittels Kleben und/oder Nieten verbunden.

Auf den gegen den Dachrahmengurt 2 gerichteten Seitenendflächen der Vertikalprofile 27 liegt ein Wandlängsprofil 30 auf, welches eine bodenwärts geöffnete U-förmige Rinne 26 und auf der der U-förmigen Rinne 26 gegenüberliegenden dachwärtigen Seite eine rippenartige Erhebung 31 sowie eine seitlich an die U-förmige Rinne 26 anschliessende Fahne 25 enthält. Die U-förmige Rinne 26 des Wandlängsprofils 30 nimmt die dachwärtigen Endabschnitte der Vertikalprofile 27 auf. Die Vertikalprofile 27 und das Wandlängsprofil 30 sind mittels Nieten 13 miteinander verbunden. Die Verbindung kann jedoch grundsätzlich mittels Kleben, Nieten, Schrauben oder einer Kombination von diesen erfolgen.

Die dachwärtige Seitenfläche der Fahne 25 weist eine Abstufung 32 auf, so dass nach dem Zusammenfügen von Wand- und Dachrahmengurt 2 zwischen dem Dachrahmengurt 2 und der Fahne 25 des Wandlängsprofils 30 eine Ausnehmung entsteht, in welcher der umgebogene Endabschnitt der Wandverkleidung 16 verläuft.

An der Aussenseite der Rahmenkonstruktion ist eine Wandverkleidung 16, vorzugsweise eine Blechverkleidung aus Aluminium oder seinen Legierungen an die Querprofile 29 angebracht. Am dachwärtigen Seitenende des Wandelementes 28 ist die Wandverkleidung 16 auf der Höhe der Fahne 25 gebogen, so dass der Endabschnitt der Wandverkleidung 16 auf der dachwärtigen Seite der Fahne 25 aufliegt. Die Wandverkleidung 16 ist mittels Kleben und/oder Nieten mit der Fahne 25 verbunden.

Im wesentlichen parallel zu den beiden Flanken der U-förmigen Rinne 26 verlaufende Bohrungen 22 durchqueren die rippenartige Erhebung 31 und die U-förmige Rinne 26 in ihrem dachwärtigen Bereich.

Die rippenartige Erhebung 31 des Wandlängsprofils 30 wird bei der Montage des Wandelementes 28 an den Dachrahmengurt 2 in den Eintrittsbereich der hinterschnittenen Nut 12 geschoben. Eine das Bohrloch 22 durchsetzende Schraube 10 greift in die hinterschnittene Nut 12 der Wandanschlusskonfiguration 3, wo sie in das Schraubloch eines Klemmstücks 11 gedreht wird. Durch das Festdrehen der Schraube wird das Klemmstück 11 in der Nut 12 festgeklemmt. Das Wandelement 7 wird an mehreren Stellen längsseitig mit dem Dachrahmengurt 2 nach genannter Methode verbunden.

Das Dachelement 6 und sein Anschluss an den Dachrahmengurt 2 entsprechen dem vorangehenden Ausführungsbeispiel gemäss Fig. 3.

## Patentansprüche

1. Kastenaufbauten für Strassenfahrzeuge, enthaltend Wandelemente, Dachrahmengurten und ein oder mehrere Dachelemente,
dadurch gekennzeichnet, dass
die Wandelemente (7) auf einer Höhe H enden und auf der Höhe H die Wandelemente (7) mit Dachrahmengurten (2) verbunden sind und die Dachrahmengurten (2) Querschnittshöhen z und Querschnittsbreiten y aufweisen und das Dachelement (6) eine Breite b und das Wandelement (7) eine Höhe h aufweist und das Dachelement auf der Höhe H + z angeordnet ist und Dachhöhenvarianten von Kastenaufbauten der Höhe h + z durch die unterschiedlichen Querschnittshöhen z der Dachrahmengurten (2) bestimmt sind und bei gleicher Höhe h der Wandelemente (7) und gleicher Breite b der Dachelemente (6) die Kastenaufbauten (1) somit unterschiedliche Dachhöhenvarianten aufweisen.

2. Kastenaufbauten nach Anspruch 1, dadurch gekennzeichnet, dass der Dachrahmengurt (2) eine Dachanschlusskonfiguration (4), einen Dachgurt-Zwischenabschnitt (5) und eine Wandanschlusskonfiguration (3) enthält.

3. Kastenaufbauten nach Anspruch 1 und 2, dadurch gekennzeichnet, dass die Gesamtquerschnittshöhe z des Dachrahmengurtes (2) der Dachhöhenvarianten durch die Variation der Querschnittshöhe x des Dachgurt-Zwischenabschnittes (5) bestimmt ist, und die Wand- (3) und Dachanschlusskonfiguration (4) und ihre vertikale Ausrichtung am Dachrahmengurt (2) bei allen Dachhöhenvarianten gleich sind, und dass die Querschnittsbreite y des Dachrahmengurts (2) bei allen Dachhöhenvarianten gleich ist.

4. Kastenaufbauten nach Anspruch 1 bis 3, dadurch gekennzeichnet, dass der Dachrahmengurt (2) ein Strangpressprofil, vorzugsweise ein Ein- oder Mehrkammerhohlprofil, ist.

5. Kastenaufbauten nach Anspruch 4, dadurch gekennzeichnet, dass der Dachrahmengurt (2) ein Strangpressprofil aus Metall, vorzugsweise aus Aluminium oder seinen Legierungen ist.

6. Kastenaufbauten nach Anspruch 1 bis 4, dadurch gekennzeichnet, dass das Wandelement (7) und der Dachrahmengurt (2) einander anliegen und die Wandanschlusskonfiguration (3) des Dachrahmengurtes (2) eine hinterschnittene Nut (12) enthält und das Wandelement (7) von Befestigungsmitteln (10) durchdrungen ist, und die Befestigungsmsittel (10) in die hinterschnittene Nut (12) der Wandanschlusskonfiguration (3) greifen, und Gegenstücke (11) arretieren.

7. Kastenaufbauten nach Anspruch 6, dadurch gekennzeichnet, dass das Wandelement (7) von Befestigungsmitteln (10) durchdrungen ist und die Befestigungsmittel Schrauben sind und die Schrauben in die hinterschnittene Nut (12) der Wandanschlusskonfiguration (3) greifen, und Gegenstücke (11) arretieren und die Gegenstücke Klemmstücke sind.

8. Kastenaufbauten nach Anspruch 1 bis 4, dadurch gekennzeichnet, dass die Dachanschlusskonfiguration (4) aus einer U-förmigen Rinne (18) besteht und Dachspriegel (9) des Dachelementes (6) in die Rinne (18) greifen und durch Befestigungsmittel, vorzugsweise eine Klebnaht, Schweissnaht, Nieten, Schrauben oder eine Kombination von diesen, mit dem Dachrahmengurt (2) verbunden sind, und die Dachverkleidung (8) des Dachelementes (6) die Aussenfläche der äusseren Fahne (17) des Dachrahmengurt (2) um einen Bereich längsseitig überlappt und einen Überlappungsbereich bildet und zwischen Dachverkleidung (8) und äusserer Fahne (17) Befestigungsmittel, vorzugsweise Klebnähte, Schweissnähte, Nieten, Schrauben oder eine Kombination von diesen, angeordnet sind.

9. Kastenaufbauten nach Anspruch 1, dadurch gekennzeichnet, dass das Dachelement (6) eine Rahmenkonstruktion ist, enthaltend Dachspriegel (9) und eine Dachverkleidung (8), wobei die Dachverkleidung (8) vorzugsweise eine Blechverkleidung, insbesondere aus Aluminium oder seinen Legierungen, ist.

10. Kastenaufbauten nach Anspruch 1, dadurch gekennzeichnet, dass das Wandelement (28) eine Rahmenkonstruktion aus Vertikalprofilen (27) und diese verbindenden Querprofilen (29) ist, die aussenseitig eine Wandverkleidung (16), vorzugsweise eine Blechverkleidung, insbesondere aus Aluminium oder seinen Legierung, enthält.

11. Kastenaufbauten nach Anspruch 1, dadurch gekennzeichnet, dass die Wand- und/oder Dachelemente (28, 6) Bleche oder Blechschalen enthalten oder daraus bestehen, und die Bleche oder Blechschalen vorzugsweise strukturiert oder mit Spriegel ausgesteift sind oder Profilbleche oder Tiefziehschalen sind.

12. Kastenaufbauten nach Anspruch 11, dadurch gekennzeichnet, dass die Bleche oder Blechschalen vorzugsweise aus Aluminium oder seinen Legierungen sind.

13. Kastenaufbauten nach Anspruch 1, dadurch gekennzeichnet, dass die Wand- und/oder Dachelemente (28, 6) Kunststoffelemente oder Verbundelemente sind.

14. Kastenaufbauten nach Anspruch 13, dadurch gekennzeichnet, dass die Kunststoffelemente oder Verbundelemente, armierte Kunststoffe, aus der Reihe der mit Verstärkungsfasern, vorzugsweise Glasfasern, Kohlefasern, Aramidfasern, Polyamidfasern oder Geweben, Gewirken oder Vliesen genannter Materialien, verstärkten Kunststoffe, enthalten.
